# FASCICULE DE BREVET EUROPEEN

(11) **EP 0 782 941 B1**
(45) Date de publication et mention de la délivrance du brevet: **19.03.2003**
(21) Numéro de dépôt: 96120329.6
(22) Date de dépôt: 18.12.1996
(51) Int. Cl.: B60L 11/12, B60L 11/18, B60L 15/20

(54) **Procédé et dispositif pour régler la répartition de la puissance électrique dans un véhicule automobile, notamment à propulsion hybride**
Verfahren und Vorrichtung zur Regelung der elektrischen Energieverteilung in einem Kraftfahrzeug, insbesondere mit Hybridantrieb
Method and device for control of the electric power distribution in a motor vehicle, especially with hybride drive

(30) Priorité: 05.01.1996 FR 9600093
(43) Date de publication de la demande: 09.07.1997
(73) Titulaire: The Swatch Group Management Services AG, 2501 Biel (CH)
(72) Inventeur: Theurillat, Patrick, 1400 Yverdon-les-Bains (CH); Francescutto, Gianni, 2504 Bienne (CH); Apter, Robert, 1400 Yverdon-les-Bains (CH)
(74) Mandataire: Balsters, Robert

(56) Documents cités:
- EP-A- 0 460 850
- EP-A- 0 543 390
- EP-A- 0 645 278
- WO-A-93/07022
- DE-A- 4 116 899
- DE-A- 4 344 053
- 12TH INTERNATIONAL ELECTRIC VEHICLE SYMPOSIUM, 5 - 7 Décembre 1994, ANAHEIM US, pages 458-469, XP000488445 O. VITTONE: "FIAT CONCEPTUAL APPROACH TO HYBRID CARS DESIGN"

## Description

La présente invention concerne un procédé pour régler la répartition de la puissance électrique dans un circuit d'alimentation à tension continue dans un véhicule automobile comportant plusieurs organes électriques susceptibles de consommer et/ou produire de la puissance sur le circuit d'alimentation, l'un desdits organes électriques étant un ensemble propulseur électrique susceptible d'entraîner au moins une roue motrice du véhicule. L'invention concerne aussi un système d'entraînement susceptible d'appliquer un tel procédé.

L'invention s'applique en particulier aux véhicules à propulsion hybride du type série, pourvus d'un groupe générateur qui comporte un moteur thermique entraînant une génératrice électrique, mais elle est aussi applicable à des véhicules à propulsion hybride parallèle ou mixte série-parallèle, ainsi qu'à des véhicules purement électriques, où l'énergie électrique nécessaire pour la traction est fournie par une autre source qu'un groupe générateur, par exemple une batterie d'accumulateurs, une pile à combustible ou des cellules photovoltaïques.

Un véhicule automobile à propulsion hybride du type série comporte un groupe générateur à moteur thermique couplé à une génératrice électrique, qui fournit de l'électricité à un circuit d'alimentation, en général à tension continue pour qu'une batterie d'accumulateurs puisse être raccordée à ce circuit. Un ensemble propulseur comportant un ou plusieurs moteurs électriques est alimenté par le circuit d'alimentation pour entraîner les roues motrices du véhicule. Dans la plupart des applications, l'ensemble propulseur peut aussi effectuer un freinage électrique à récupération, fournissant ainsi de l'énergie électrique au circuit d'alimentation. Cette énergie peut être consommée par d'autres organes raccordés au circuit d'alimentation, par exemple elle peut être stockée sous forme chimique dans une batterie d'accumulateurs, ou être stockée dans un accumulateur d'énergie cinétique, ou encore être dissipée thermiquement dans un organe de sécurité destiné à absorber un éventuel excédent d'énergie. Ainsi, le circuit d'alimentation à tension continue échange à chaque instant différents flux de puissance avec les organes qui lui sont raccordés. Ces flux varient notablement au cours du temps, à cause de la prépondérance des régimes transitoires dans les systèmes d'entraînement des automobiles. Comme la somme algébrique de ces flux doit être nulle à chaque instant, abstraction faite des pertes dans le circuit lui-même, il est nécessaire de régler l'un ou plusieurs de ces flux de façon à réaliser l'équilibre tout en obtenant au moins approximativement la puissance de traction ou de freinage désirée par le conducteur du véhicule.

La méthode traditionnelle pour gérer les flux de puissance utilise la connaissance exacte des puissances produites et consommées par tous les éléments du système. Cette méthode nécessite de calculer quelle est la puissance que chaque organe doit produire ou consommer afin d'obtenir l'équilibre du circuit. Il faut alors connaître avec précision la méthode de réglage de chaque composant du système pour réaliser un réglage correct de l'ensemble. Même si un organe consomme une puissance qui n'est pas importante dans le fonctionnement du système, il est nécessaire de la connaître, et ceci de manière précise. En conséquence, l'application de cette méthode pour gérer un système où N organes sont raccordés au circuit d'alimentation exige l'utilisation d'au moins N-1 capteurs de courant. Or ces capteurs n'offrent généralement pas une bonne précision sur une large plage de mesure, ce qui introduit des marges d'erreur dans le réglage et exige souvent des réglages supplémentaires pour assurer la stabilité. Lorsqu'une batterie est raccordée au circuit d'alimentation, il peut être nécessaire de lui donner la priorité dans le processus de réglage, parce qu'elle ne supporte pas très bien les fluctuations de courant, elle est fragile et coûte relativement cher. La mise en application d'une telle priorité dans le procédé de réglage représente une complication supplémentaire.

Dans un système opérant sans batterie tampon et sans organe de sécurité pour absorber de la puissance excédentaire, la méthode de réglage par mesure des puissances n'est pas possible, car toute la puissance produite doit être consommée immédiatement. La régulation d'ensemble du système doit alors être traitée de manière différente, en particulier pour que, dans le mode de traction, la puissance du moteur thermique et du groupe générateur en général et la puissance de l'ensemble propulseur soient égales à chaque instant.

Des procédés et dispositifs de régulation d'un système d'entraînement hybride série dans un véhicule automobile sont décrits notamment dans les demandes de brevets WO 93/07022, EP-A-0 460 850, EP-A-0 543 390, EP-A-0 645 278 et DE-A-4 116 899. Ces dispositifs comportent une unité centrale de régulation qui reçoit, outre les signaux de consigne d'accélération ou de freinage donnés par le conducteur, divers signaux représentatifs de l'état du système, provenant de divers capteurs comprenant toujours un ou plusieurs capteurs de courant, afin de permettre le calcul d'un ou plusieurs flux de puissance entrant dans ou sortant du circuit d'alimentation.

Par exemple, le document EP-A-0 543 390 décrit un dispositif de commande d'entraînement dans un véhicule hybride série pourvu d'un groupe générateur comportant un moteur thermique et une génératrice à courant continu raccordée au circuit d'alimentation. Ce circuit alimente un groupe propulseur qui comprend un convertisseur DC/AC et un moteur électrique triphasé. Ce moteur entraîne deux roues motrices par l'intermédiaire d'un différentiel. Une batterie raccordée directement au circuit d'alimentation permet trois modes d'alimentation du groupe propulseur selon la puissance demandée à celui-ci, à savoir l'alimentation uniquement par la batterie dans une plage de faible puissance, l'alimentation uniquement par le groupe générateur dans une plage de puissance moyenne, correspondant à une plage de bon rendement du moteur thermique, et l'alimentation par le groupe générateur et la batterie dans une plage de puissance élevée. La régulation de l'ensemble est assurée par une unité électronique qui reçoit les signaux de consigne du conducteur et des signaux représentant l'état du système, à savoir le courant produit par la génératrice à courant continu, le courant entrant ou sortant de la batterie, la tension du circuit d'alimentation et la vitesse du moteur électrique. Sur la base de ces informations, l'unité de régulation détermine les différents flux de puissance en agissant sur l'alimentation en carburant du moteur thermique, sur le courant d'excitation de la génératrice pour obtenir une tension déterminée du circuit d'alimentation, et sur le convertisseur DC/AC de l'ensemble propulseur. Ainsi, elle commande en même temps la puissance électrique produite par le groupe générateur et la puissance électrique consommée par l'ensemble propulseur, et elle règle l'équilibre des trois flux de puissance concernés en surveillant deux d'entre eux, aux bornes de la batterie et aux bornes de sortie de la génératrice. Avec un tel procédé, la qualité et l'équilibre du réglage sont essentiellement tributaires de la précision des mesures de courant. Cependant, cette précision n'est pas bonne, à cause de la très grande plage de variation des intensités de courant continu dans un tel système de propulsion pour véhicule automobile. Il peut donc en résulter des réglages imprécis et instables, conduisant notamment à des fluctuations indésirables du courant aux bornes de la batterie, réduisant la durée de vie de celle-ci. Un autre inconvénient d'un tel procédé est qu'il doit être profondément transformé si d'autres appareils électriques sont raccordés au circuit d'alimentation, par exemple un accumulateur d'énergie cinétique, un appareil de climatisation etc., ou s'il n'y a pas de batterie tampon. En résumé, toute addition ou suppression d'un flux de puissance sur le circuit d'alimentation exige une modification importante du procédé et des appareils de régulation.

Le même problème se pose dans le cas d'un véhicule purement électrique, puisque celui-ci fonctionne comme un véhicule à propulsion hybride dont le groupe générateur serait mis hors service, l'énergie de traction étant fournie par une source électrique qui peut être réglable ou non.

La présente invention vise à éviter les inconvénients précités de l'art antérieur, grâce à un procédé permettant d'effectuer un réglage des flux de puissance entre les différents éléments du système d'une manière simple, fiable et économique, s'appliquant avantageusement à différentes configurations du système d'entraînement, notamment avec ou sans batterie, et avec ou sans organe de sécurité raccordé au circuit d'alimentation, sans exiger de changements radicaux des réglages de base pour passer d'un système à un autre. Un autre but consiste à obtenir un réglage stable et fiable du système, notamment en évitant autant que possible l'utilisation de capteurs de courant.

Un autre but est de pouvoir commander le fonctionnement d'une batterie en évitant des ondulations du courant aux bornes de celle-ci, afin d'augmenter sa durée de vie.

Enfin, le procédé devrait offrir un maximum de souplesse au réglage des flux de puissance, c'est-à-dire permettre un large éventail de combinaisons pour obtenir un rendement optimal du système, ainsi qu'une ergonomie intéressante du véhicule.

A cet effet, l'invention concerne un procédé du genre indiqué en préambule, caractérisé en ce que dans un mode de traction, on définit l'ensemble propulseur comme organe d'équilibrage de puissance, lequel échange une puissance réglée avec le circuit d'alimentation, on détermine une tension de consigne du circuit d'alimentation, on surveille continuellement une tension effective du circuit d'alimentation et l'on règle ladite puissance réglée de l'organe d'équilibrage de façon à maintenir ladite tension effective au niveau de ladite tension de consigne.

L'un desdits organes électriques peut être un groupe générateur susceptible d'échanger sur commande une première puissance avec le circuit d'alimentation.

Ainsi, des moyens de commande peuvent déterminer ladite première puissance à fournir par le groupe générateur essentiellement d'après une demande de puissance ou de couple donnée par le conducteur, sans avoir à régler cette puissance en temps réel sur la base de la répartition des flux de puissance électrique dans le circuit d'alimentation. Le réglage à effectuer par une unité électronique consiste essentiellement à surveiller la tension du circuit d'alimentation, laquelle va augmenter si la consommation est insuffisante ou baisser si la consommation est trop forte, à comparer cette tension effective à une valeur de consigne et, en cas d'écart, à régler la puissance de l'organe d'équilibrage de façon à ramener la tension à la valeur de consigne. En mode de traction, il est facile d'effectuer ce réglage sur l'ensemble propulseur, parce que c'est souvent le principal consommateur et qu'il comporte dans la plupart des cas un convertisseur DC/AC offrant de larges possibilités de réglage.

Le choix de la tension du circuit d'alimentation comme paramètre essentiel du réglage est avantageux à plusieurs titres. Il s'agit d'un paramètre commun à tous les organes raccordés au circuit, quels que soient le nombre et la nature de ceux-ci. Cette tension varie dans une plage peu étendue et peut être mesurée avec précision. L'unité de commande définit la tension de consigne en fonction d'une répartition voulue des flux de puissance, et ensuite le réglage peut s'effectuer sans mesurer ces flux, donc sans utiliser de capteurs de courant.

Il en résulte d'une part un niveau élevé de stabilité et de fiabilité du réglage, et d'autre part une grande facilité d'adapter l'unité de réglage à différentes configurations du système d'entraînement, selon qu'une batterie et un organe de sécurité sont présents ou non.

Dans le cas où une batterie est raccordée au circuit d'alimentation, le réglage basé sur la tension est spécialement avantageux parce que la tension de consigne peut être choisie en fonction des caractéristiques de la batterie et en particulier de son état de charge, et ce choix permet de prédéterminer la puissance prélevée de la batterie ou absorbée par elle. Il permet en particulier de stabiliser aisément le courant aux bornes de la batterie à une valeur nulle, comme on l'expliquera plus loin.

Le procédé selon l'invention a aussi l'avantage de s'appliquer de la même manière, le cas échéant, au mode de freinage électrique qu'au mode de traction, également avec différentes configurations du système d'entraînement. On peut alors choisir comme organe d'équilibrage l'ensemble propulseur, qui dans ce cas fournit de la puissance au circuit d'alimentation, ou un organe consommateur tel qu'un organe de sécurité.

Il faut noter que le document EP-A-0 645 278 décrit un procédé de commande d'un véhicule hybride série ayant une batterie tampon raccordée au circuit d'alimentation, où une unité électronique de commande surveille la tension et l'état de charge de la batterie pour gérer les flux de puissance électrique. Cependant, le réglage par ce procédé est beaucoup moins simple et stable que celui de la présente invention, parce qu'il nécessite de calculer la puissance effective de l'ensemble propulseur à partir de mesures de son couple et de sa vitesse, ou du courant et de la tension du moteur électrique, puis de rétroagir sur le groupe générateur en fonction de cette puissance et de l'état de charge de la batterie pour maintenir celui-ci entre certaines limites. C'est donc la batterie qui assure l'équilibre précis des flux de puissance, en subissant presque constamment des cycles de charge et de décharge.

La présente invention concerne également un système d'entraînement pour véhicule automobile, notamment pour la mise en oeuvre du procédé selon l'invention, ledit système comportant plusieurs organes électriques susceptibles de consommer et/ou produire de la puissance sur le circuit d'alimentation, l'un desdits organes étant un ensemble propulseur électrique réglable susceptible d'entraîner au moins une roue motrice du véhicule, et des moyens de commande agencés pour commander la puissance de l'ensemble propulseur, lequel échange une deuxième puissance avec le circuit d'alimentation, les moyens de commande étant agencés pour surveiller continuellement la tension effective du circuit d'alimentation, caractérisé en ce que les moyens de commande comportent une unité électronique de réglage associée à l'ensemble propulseur et agencée pour régler la puissance de celui-ci dans un mode de traction sur la base d'une tension de consigne définie par les moyens de commande, de façon à maintenir ladite tension effective au niveau de ladite tension de consigne.

D'autres caractéristiques et avantages de l'invention apparaîtront dans la description suivante de différentes formes de réalisation, présentées à titre d'exemples en référence aux dessins annexés, dans lesquels :
- la figure 1 est un schéma général d'un système d'entraînement d'un véhicule à propulsion hybride série dans lequel est appliqué le procédé selon l'invention;
- la figure 2 est un schéma fonctionnel de l'unité de commande du système de la figure 1, dans le cas où ce système est dépourvu de batterie et d'organe de sécurité;
- la figure 3 est un diagramme schématique des caractéristiques courant/tension aux bornes d'une batterie;
- la figure 4 représente à une échelle agrandie un détail des courbes de la figure 3;
- la figure 5 est un schéma fonctionnel de l'unité de commande du système de la figure 1, dans le cas où le système comporte une batterie;
- la figure 6 représente une variante du schéma de la figure 5;
- la figure 7 représente l'évolution de certaines variables dans le système en fonction du temps, pour une augmentation de demande de puissance qui peut être couverte par le groupe générateur;
- la figure 8 représente les mêmes variables que la figure 7, mais pour une augmentation de demande de puissance qui ne peut pas être couverte entièrement par le groupe générateur;
- la figure 9 représente l'évolution de certaines variables dans le système en fonction du temps pour le cas d'un freinage électrique alimentant la batterie et l'organe de sécurité;
- la figure 10 est analogue à la figure 9, mais illustre une autre forme d'exécution du procédé;
- la figure 11 est analogue à la figure 1, pour le cas d'un véhicule à propulsion hybride parallèle, et
- la figure 12 est analogue à la figure 1, pour le cas d'un véhicule à propulsion purement électrique.

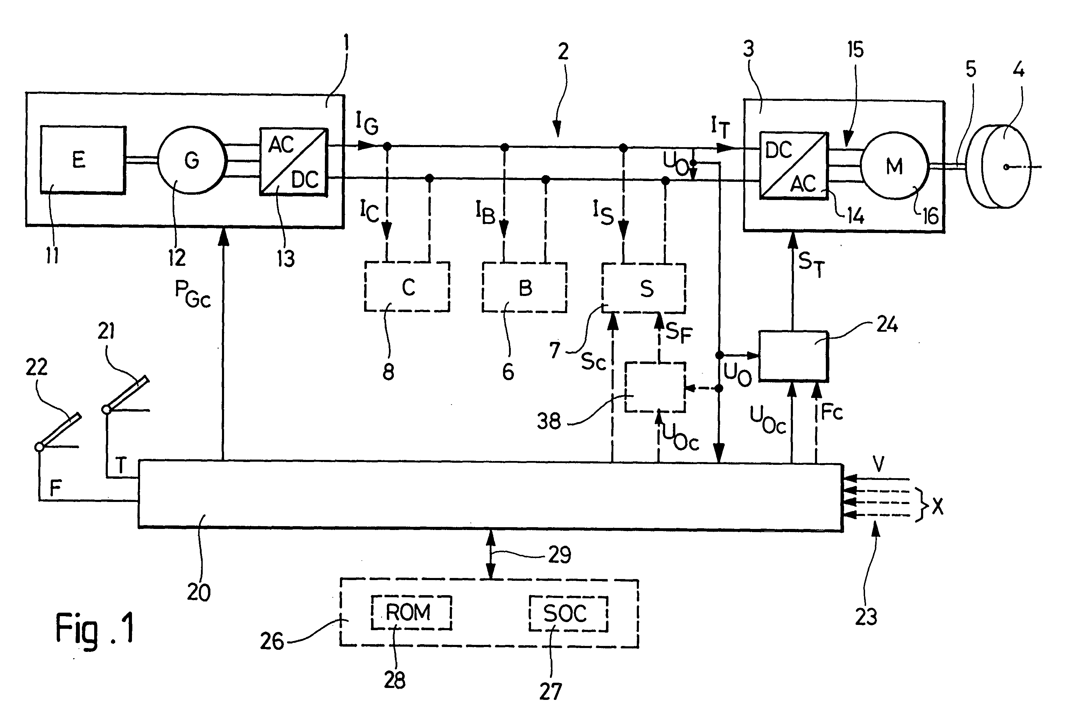

En référence à la figure 1, l'exemple décrit ici concerne le système d'entraînement d'un véhicule automobile à propulsion hybride du type série, comportant un groupe générateur 1 agencé pour délivrer un courant électrique continu I_{G} à tension continue U₀ sur un circuit d'alimentation bifilaire 2. Ce circuit alimente un ensemble propulseur 3 qui entraîne au moins une roue motrice 4 du véhicule par un arbre 5 ou par l'intermédiaire de tout autre moyen de transmission mécanique. Bien entendu, le véhicule comporte généralement plusieurs roues motrices, entraînées soit par un moteur électrique commun, soit par des moteurs électriques individuels.

Dans le cas général représenté ici, le circuit d'alimentation 2 est aussi raccordé à une batterie d'accumulateurs 6 servant de tampon, à un organe de sécurité 7 destiné à absorber de la puissance excédentaire, et à un ou plusieurs autres organes consommateurs 8, par exemple un appareil de chauffage et de climatisation de l'habitacle du véhicule. Pour montrer que les éléments 6, 7 et 8 sont facultatifs, on les a dessinés en traits interrompus dans la figure 1.

Dans la forme de réalisation représentée, le groupe générateur 1 comprend de manière connue un moteur thermique 11, par exemple du type Otto, Diesel ou à turbine à gaz, entraînant une génératrice triphasée 12, par exemple du type asynchrone ou sans balais, et un convertisseur AC/DC 13 qui délivre le courant continu I_{G} au circuit d'alimentation 2. Dans d'autres exécutions, le groupe générateur 1 pourrait comporter une génératrice à courant continu ou être constitué par toute autre source embarquée à puissance réglable, telle qu'une pile à combustible, des cellules photovoltaïques associées à un convertisseur DC/DC, etc.

L'ensemble propulseur 3 représenté schématiquement à la figure 1 comprend un convertisseur électronique DC/AC 14 qui est couplé par un réseau triphasé 15 à une ou plusieurs machines électriques 16, par exemple du type asynchrone ou sans balais. De préférence, chaque machine électrique 16 est couplée à une seule roue motrice 4 par son arbre 5, et elle peut fonctionner aussi bien en moteur pour la traction qu'en génératrice pour un freinage électrique à récupération, fournissant alors de la puissance au circuit d'alimentation 2 à travers le convertisseur commun 14.

Le fonctionnement du système d'entraînement est géré par une unité électronique de commande 20 en fonction de l'état du système et en fonction des commandes données par le conducteur, qui sont représentées schématiquement ici par une pédale d'accélérateur 21 délivrant une commande de traction T et une pédale de frein 22 délivrant une commande de freinage électrique F. De préférence, les signaux de commande T et F ont chacun une amplitude variable représentant une performance désirée par le conducteur. Les deux signaux T et F pourraient provenir de la même pédale.

Pour connaître l'état du système, l'unité de commande 20 reçoit des signaux délivrés par des capteurs qui ne sont pas représentés, afin de simplifier l'exposé. Le principal de ces signaux représente la tension effective U0 du circuit d'alimentation 2, c'est-à-dire la grandeur qui joue le rôle essentiel dans le procédé selon l'invention. Les autres signaux d'état 23 reçus par l'unité 20 sont représentés schématiquement dans la figure par un signal V, indiquant la vitesse de l'arbre 5 de la machine électrique de traction 16, et un groupe de signaux X susceptibles d'indiquer, par exemple, la présence de l'organe de sécurité 7, l'état enclenché ou déclenché du consommateur 8, etc.

Comme le montre la figure 1, l'unité 20 commande le système d'entraînement par au moins deux signaux de consigne PGc et U0c. Le signal PGc indique continuellement au groupe générateur 1 la puissance électrique qu'il doit fournir au circuit d'alimentation 2. De manière connue, le groupe 1 comprend une unité électronique de gestion qui règle la puissance de sortie du groupe, en particulier le courant IG, en agissant dans le cas présent sur l'alimentation en air et en carburant du moteur 11 et sur la génératrice 12 pour régler son couple résistant. Dans le mode de traction, le signal U0c agit uniquement sur l'ensemble propulseur 3. Dans le présent exemple, il est transmis à une unité électronique de réglage 24 qui reçoit aussi le signal représentatif de la tension effective U0 du circuit d'alimentation 2. L'unité de réglage 24 compare la valeur U0 à la valeur U0c et, selon le résultat de cette comparaison, règle le convertisseur de traction 14 au moyen d'un signal ST qui correspond à une augmentation ou diminution de puissance électrique du convertisseur 14, donc aussi à une variation de la puissance mécanique de la machine électrique 16 fonctionnant en moteur ou en génératrice. De manière connue, le réglage du convertisseur 14 peut faire varier la tension, le courant et/ou la fréquence d'alimentation sur le réseau triphasé 15.

Dans les formes de réalisation où il est prévu un freinage électrique commandé par le signal F, l'unité de commande 20 peut délivrer en outre une consigne de couple de freinage F_{c} à l'unité de réglage 24 pour modifier en conséquence l'action de l'ensemble propulseur 3, comme on le décrira plus loin. De même, dans les cas où il est prévu un organe de sécurité 7, l'unité 20 peut commander cet organe au moyen d'un signal S_{c}, comme on le décrira plus loin.

Dans les formes de réalisation comportant une batterie 6, l'unité de commande 20 est associée ou combinée à une unité de gestion de batterie 26 comprenant notamment un bloc 27, qui surveille l'état de charge (SOC) de la batterie 6 et fournit un signal correspondant, et un bloc 28 tel qu'une mémoire morte (ROM) ou un dispositif à logique floue, qui contient des données caractéristiques de cette batterie. Les unités 20 et 26 échangent des signaux 29 qui seront décrits plus loin.

Bien qu'une mesure de courant soit de préférence évitée dans le procédé selon l'invention, elle n'est pas exclue dans tous les cas et peut être utilisée notamment pour des contrôles de sécurité ou pour calculer l'état de charge de la batterie. Toutefois, des méthodes pour déterminer l'état de charge sans utilisation de capteurs de courant sont connues.

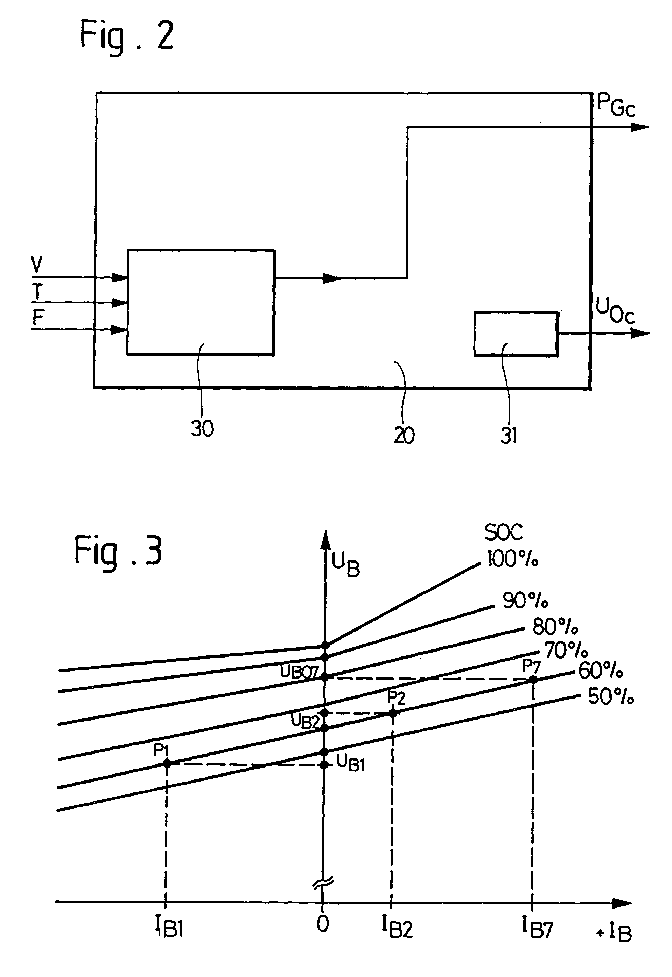

Dans la figure 1, on a représenté les courants électriques continus entrant et sortant du circuit d'alimentation 2, avec des flèches indiquant le sens positif. Dans le cas général représenté, l'équilibre du circuit peut s'écrire algébriquement : I_{G} = I_{T} + I_{C} + I_{B} + I_{S}, où I_{T} est le courant allant à l'ensemble propulseur 3, I_{C} est le courant allant à l'organe consommateur 8, I_{B} est le courant allant à la batterie 6 et I_{S} est le courant allant à l'organe de sécurité 7. En multipliant par la tension commune U₀, on obtient une équation analogue pour l'équilibre des puissances électriques. L'homme du métier comprendra que si l'équilibre n'est pas réalisé, la tension U₀ du circuit d'alimentation va monter si la consommation de puissance est inférieure à la production, ou baisser si la consommation est supérieure à la production. La figure 1 montre que le procédé selon l'invention rétablit alors l'équilibre avant tout par le réglage de l'ensemble propulseur 3, sur la base de la comparaison entre U₀ et U_{0c}. Par contre, le groupe générateur 1 qui est le fournisseur principal de puissance en mode de traction est commandé directement en fonction de la consigne T (ou F) donnée par le conducteur, sans subir de rétroaction de l'ensemble propulseur 3. En d'autres termes, en mode de traction, on détermine a priori la puissance électrique introduite dans le circuit par le groupe générateur, et l'on équilibre le circuit par réglage d'un des organes consommateurs de façon à maintenir la tension effective U₀ au niveau de la tension de consigne U_{0c}. Il incombe alors à l'unité de commande 20 de déterminer cette tension de consigne en fonction de l'état du système et des commandes données par le conducteur. En mode de freinage électrique, un procédé analogue est applicable, mais éventuellement d'une manière différente puisque la puissance fournie provient alors de l'ensemble propulseur 3. Ceci est expliqué ci-dessous pour différentes configurations et différents modes de fonctionnement du système d'entraînement, en référence aux figures 2 à 10.

Dans une première configuration particulièrement simple, le système d'entraînement représenté à la figure 1 ne comporte aucun des éléments 6, 7 et 8. En mode de traction, la puissance électrique produite par le groupe générateur 1 doit être entièrement consommée par l'ensemble propulseur 3. Les signaux F_{c}, U_{c} et Sc, de même que l'unité de gestion de batterie 26, n'existent pas dans ce cas. La figure 2 montre le schéma fonctionnel simplifié de l'unité de commande 20 pour une telle configuration. L'unité 20 comporte une unité de calcul de charge 30 qui reçoit les consignes T et F données par le conducteur et délivre le signal de consigne de puissance P_{Gc} au groupe générateur 1. De préférence, l'unité 30 reçoit aussi au moins un signal représentatif de l'état de l'ensemble propulseur, par exemple le signal V, pour pouvoir limiter la puissance électrique afin d'éviter des intensités excessives dans l'ensemble propulseur lorsque la machine électrique 16 tourne relativement lentement.

Pour agir sur le réglage de puissance de l'ensemble propulseur 3, l'unité 20 comporte une unité de consigne de tension 31 qui fournit un signal U_{0c} définissant une tension de consigne qui peut être constante. L'unité 31 peut alors être réalisée par exemple sous la forme d'un circuit câblé. Cependant, on peut aussi prévoir une variante dans laquelle la tension de consigne U_{0c} a une valeur variable, choisie de manière que le rendement de la chaîne soit optimal. On tiendra alors compte des caractéristiques et de l'état du système d'entraînement, par exemple pour obtenir des régimes où le moteur thermique a un bon rendement et pollue peu. L'unité 31 peut alors contenir une gamme de valeurs de U_{0c} dans une mémoire morte, dans laquelle elle choisira une valeur appropriée en fonction de l'état actuel des signaux T, F, V et éventuellement d'autres signaux qu'elle pourrait recevoir.

La configuration simple décrite ci-dessus permet aussi de freiner électriquement le véhicule, c'est-à-dire de le ralentir en utilisant la machine motrice 16 en génératrice et la "génératrice" 12 en moteur, pour entraîner le moteur thermique 11 fonctionnant en frein-moteur. Le groupe générateur 1 consommera alors une puissance électrique déterminée par le signal P_{Gc}, tandis que l'ensemble propulseur 3 se réglera automatiquement à cette puissance par le maintien de U₀ au niveau de U_{0c}, comme décrit ci-dessus.

Dans les configurations où une batterie 6 est raccordée au circuit d'alimentation 2, la tension U₀ dépend directement des caractéristiques de tension de la batterie. Lorsqu'on applique le procédé selon l'invention à un tel système d'entraînement, on tient compte de ces caractéristiques de la batterie pour contrôler des flux de puissance dans le système en choisissant de manière appropriée la tension de consigne U_{0c}.

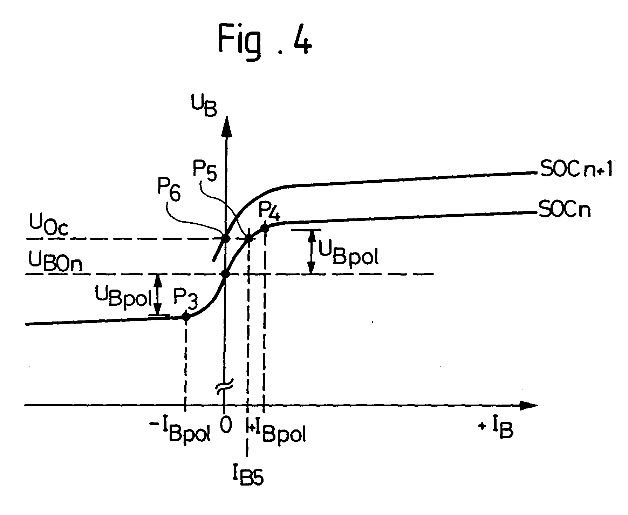

Rappelons tout d'abord quelques caractéristiques connues d'une batterie classique, en référence aux figures 3 et 4. La figure 3 est un diagramme schématique montrant le courant I_{B} (ou la puissance P_{B}) en fonction de la tension U_{B} aux bornes de la batterie 6 pour différents états de charge SOC de cette batterie. Le courant a un signe positif s'il entre dans la batterie et négatif s'il en sort. Quand le courant est nul, la batterie présente une tension à vide U_{B0} qui varie avec l'état de charge SOC. A titre d'exemple et en supposant que SOC = 60 %, on a représenté un point de fonctionnement P₁ où la batterie fournit un courant I_{B1} sous une tension U_{B1}, et un autre point de fonctionnement P₂ où la batterie absorbe un courant I_{B2} sous une tension U_{B2}. En pratique, le faisceau de courbes de la figure 3 peut, par exemple, être mémorisé dans une unité électronique sous la forme d'une table à trois dimensions. Cette table peut être remise à jour périodiquement, notamment pour tenir compte du vieillissement ou d'autres paramètres de la batterie. Une autre méthode connue consiste, en connaissant un point d'une des courbes, à calculer un autre point de cette courbe à l'aide d'un algorithme approprié.

La figure 4 représente schématiquement, d'une manière fortement agrandie, l'une quelconque des courbes de la figure 3 au voisinage de l'axe vertical U_{B}, c'est-à-dire au voisinage de la tension à vide U_{B0} pour un état de charge SOCₙ. Pour qu'un courant I_{B} positif ou négatif s'établisse aux bornes de la batterie, une tension de polarisation U_{Bpol} doit être respectivement ajoutée ou soustraite à la tension à vide U_{B0}. Par conséquent, la courbe présente une très forte pente entre un point P₃, correspondant à une tension U_{B0}-U_{Bpol} et un courant -I_{Bpol}, et un point P₄ correspondant à une tension U_{B0}+U_{Bpol} et un courant +I_{Bpol}. On notera que les valeurs ±I_{Bpol} sont proches de zéro, l'échelle de la figure 4 étant fortement agrandie par rapport à celle de la figure 3.

Dans la présente invention, cette caractéristique est spécialement utile pour stabiliser la répartition des puissances électriques lorsqu'on désire annuler le courant de batterie I_{B} par un choix approprié de la tension de consigne U_{0c}. Dans le cas de la figure 4, l'état de charge étant SOCₙ, il convient de choisir U_{0c} = U_{B0n}. Il est toutefois possible d'avoir une petite erreur dans le calcul de l'état de charge, de sorte que la tension de consigne choisie U_{0c} est par exemple légèrement supérieure à U_{B0n}. Il en résulte alors le point de fonctionnement P₅, correspondant à un courant I_{B5} qui entre dans la batterie. Comme ce courant est inférieur à I_{Bpol}, il est très faible et n'affecte pratiquement pas la répartition voulue des flux de puissance. Son seul effet est de charger petit à petit la batterie jusqu'à un état de charge légèrement supérieur SOCₙ₊₁, le courant diminuant progressivement jusqu'au point de fonctionnement P₆ où I_{B} = 0. Le système tend ainsi vers l'état stable voulu, sans que la batterie subisse de fluctuation de courant. Ainsi, le procédé selon l'invention permet un réglage particulièrement précis et stable lorsqu'on veut maintenir des valeurs faibles ou nulles du courant de la batterie 6.

Au contraire, avec un procédé selon l'art antérieur utilisant un réglage basé sur des mesures de courant, toute erreur de mesure sur l'un des courants introduisait une erreur dans la répartition des flux de puissance, et cette erreur ne pouvait pas s'éliminer automatiquement. Il fallait alors prévoir un réglage supplémentaire et délicat, basé sur la surveillance de l'état de charge de la batterie, afin de maintenir celui-ci dans des limites prédéterminées.

Avec le procédé selon l'invention, si l'on veut tirer une puissance déterminée de la batterie 6, on utilise les valeurs représentées par la figure 3 pour l'état de charge SOC actuel, puisque chaque point de la courbe SOC correspondante représente de manière univoque une puissance P_{B} = U_{B}·I_{B}.

Par exemple, si la puissance voulue correspond au point P1 sur la courbe SOC = 60 %, il suffit de fixer la consigne U_{0c} à la valeur U_{B1} correspondant à ce point. La batterie 6 fournira alors le courant I_{B1} au circuit d'alimentation 2. De même, si l'on veut charger la batterie 6 avec une puissance correspondant au point P₂, on fixe la tension de consigne U_{0c} à la valeur U_{B2}, et la batterie absorbera I_{B2}. Si l'on veut charger la batterie pour porter son état de charge SOC à une valeur voulue de 80 % par exemple, sans tenir compte des autres paramètres intervenant dans le fonctionnement du véhicule, on pourra théoriquement fixer U_{0c} à une valeur égale à la tension à vide U_{B07} de la batterie pour SOC = 80 %. On aura ainsi le point de fonctionnement initial P₇ et un courant de charge I_{B7} à SOC = 60 %, puis ce courant diminuera progressivement avec l'élévation de l'état de charge. Bien entendu, il convient de contrôler que le courant I_{B7} ne dépasse pas une valeur maximale admissible, faute de quoi on choisira un SOC voulu plus bas que 80 %. Une méthode analogue est applicable pour décharger la batterie jusqu'à un état de charge inférieur à l'état de charge actuel.

Dans chaque cas, le réglage de la tension U₀ par l'action de l'unité de réglage 24 sur l'ensemble propulseur maintient U₀ dans des limites très étroites, ce qui évite des variations sensibles du courant de batterie et de la répartition des flux de puissance en général.

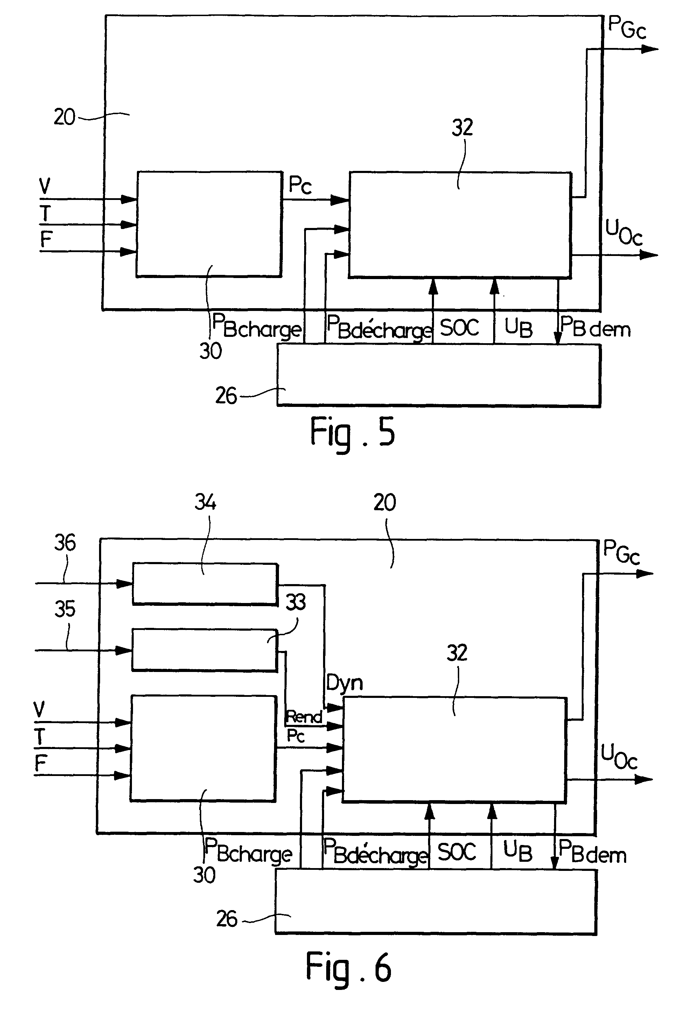

La figure 5 montre l'agencement de l'unité de commande 20 pour appliquer le procédé décrit ci-dessus, en gérant le fonctionnement de la batterie 6. L'unité 31 de la figure 2 est remplacée par une unité de répartition des flux de puissance 32, qui reçoit le signal P_{C} et échange avec l'unité de gestion de batterie 26 l'ensemble de signaux 29 représenté à la figure 1. Les signaux délivrés par l'unité 26 comprennent un signal SOC indiquant constamment l'état de charge actuel de la batterie 6, deux signaux P_{charge} et P_{décharge} indiquant constamment les limites de la fenêtre de fonctionnement de la batterie à cet état de charge, à savoir la puissance maximale admissible respectivement pour charger et pour décharger la batterie, et un signal U_{B} qui répond à un signal de puissance demandée P_{Bdem} transmis par l'unité 32. Cette puissance est positive pour charger la batterie, négative pour la décharger ou nulle si l'on veut maintenir l'état de charge actuel. Le signal U_{B} indique la tension correspondant à la puissance demandée P_{Bdem}, comme on l'a expliqué ci-dessus.

L'unité 32 calcule le signal P_{Bdem} en fonction du signal P_{c}, indiquant la puissance de traction ou de freinage désirée comme dans le cas de la figure 2, et d'un choix d'une répartition optimale de la puissance entre les organes raccordés au circuit d'alimentation 2. Ce calcul tient compte de SOC, P_{Bcharge} et P_{Bdécharge}. L'unité 32 fixe alors la tension de consigne U_{0c} à la valeur U_{B} fournie par l'unité 26, et elle délivre au groupe générateur 1 sa consigne de puissance P_{Gc}. La batterie 6 absorbera ou fournira la puissance indiquée par P_{Bdem}, tandis que l'ensemble propulseur maintiendra sa puissance à une valeur égale à P_{Gc}-P_{Bdem}.

La figure 6 montre une variante perfectionnée du schéma de la figure 5, où l'unité de répartition de puissance 32 reçoit en outre des signaux Rend et Dyn lui permettant d'optimiser la répartition de puissance en temps réel, en fonction de l'état de fonctionnement actuel de divers organes du véhicule. L'unité de commande 20 comporte alors une unité de gestion du rendement du véhicule 33 et une unité de gestion de la dynamique du véhicule 34. L'unité 33 reçoit des signaux 35 indiquant des paramètres actuels d'état ou de rendement des organes concernés, et elle calcule le signal Rend sur la base de ces signaux et de fonctions ou algorithmes pour définir une répartition préférable de puissance qui correspond à un rendement global optimal. L'unité 34 reçoit des signaux 36 indiquant des paramètres dynamiques actuels du véhicule et elle calcule le signal Dyn en conséquence, pour permettre à l'unité 32 d'anticiper sur l'état futur du système lors du choix de la répartition optimale de la puissance.

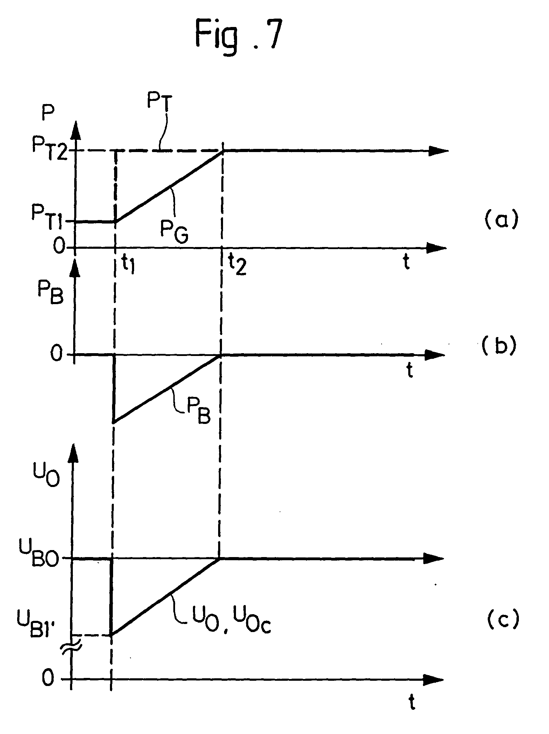

Les diagrammes de la figure 7 illustrent l'évolution de certains paramètres en fonction du temps t dans le système ayant la configuration selon la figure 5, lorsque l'action du conducteur sur la pédale d'accélérateur 21 commande une augmentation de puissance de traction qui peut être entièrement couverte par le groupe générateur 1. Pour simplifier, on fait abstraction des pertes énergétiques et des effets dynamiques transitoires. Le diagramme (a) montre que la puissance PT désirée par le conducteur et consommée par l'ensemble propulseur s'élève de P_{T1} à P_{T2} à l'instant t₁ où le conducteur presse l'accélérateur. La puissance électrique PG fournie par le groupe générateur 1 conformément au signal de consigne P_{Gc} augmente alors progressivement jusqu'à une valeur égale à P_{T2} à l'instant t₂, puis elle reste à cette valeur. Entre t₁ et t₂, la différence de puissance P_{B} = P_{G} - P_{T} est couverte par la batterie, comme le montre le diagramme (b). Pour prélever cette puissance de la batterie, l'unité 32 abaisse temporairement la tension U₀ du circuit d'alimentation en imposant une valeur de consigne U_{0c} correspondante, comme le montre le diagramme (c).

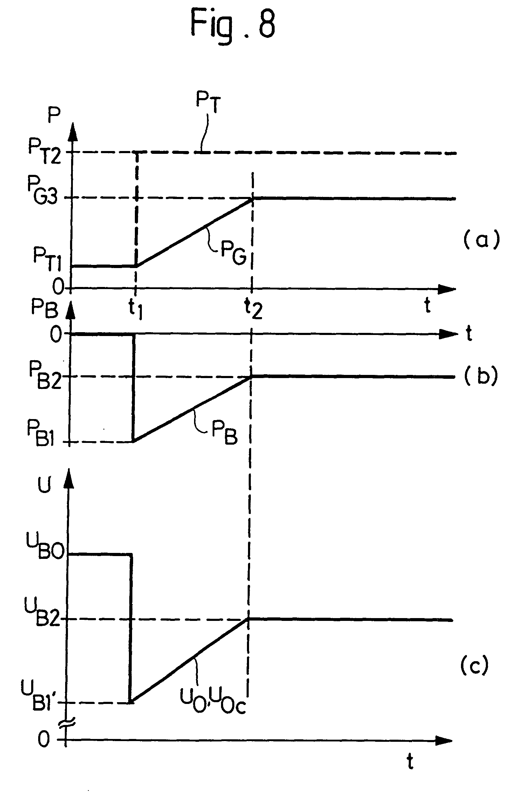

Les diagrammes (a), (b) et (c) de la figure 8 correspondent à ceux de la figure 7, mais pour un cas où la puissance PG du groupe générateur ne peut pas dépasser une valeur P_{G3} inférieure à P_{T2}. La puissance P_{B} fournie par la batterie, qui était nulle au préalable, passe à une valeur P_{B1} à l'instant t₁, puis décroît progressivement pour se stabiliser à P_{B2} = P_{G3} - P_{T2} à partir de l'instant t₂. Ces valeurs de P_{B} sont déterminées par des valeurs correspondantes de U₀ = U_{0c} comme expliqué plus haut.

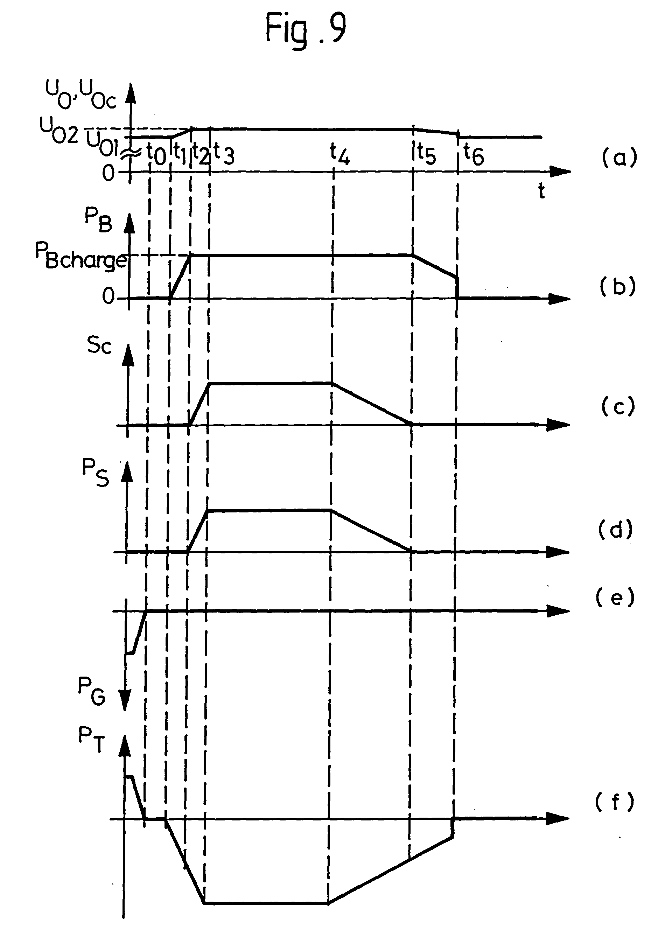

La figure 9 illustre un cas de freinage électrique conformément à la présente invention dans un système d'entraînement qui comprend, conformément à la figure 1, une batterie 6 et un organe de sécurité 7 et qui est commandé conformément au schéma de la figure 5. Les diagrammes (a), (b), (e) et (f) représentent l'évolution de paramètres déjà décrits ci-dessus. Le diagramme (c) représente le signal de consigne S_{c} commandant l'organe de sécurité 7, et le diagramme (d) représente la puissance P_{S} absorbée par cet organe.

Avant un instant t₀, le véhicule est en mode de traction, commandé par un signal T (figure 1 et 5), mais le conducteur relâche l'accélérateur et le signal T disparaît à l'instant t₀. A l'instant t₁ apparaît un signal de freinage F produit par un relâchement supplémentaire de l'accélérateur ou par l'actionnement de la pédale de frein. L'unité de commande 20 fait alors monter la tension de consigne U_{0c}, à partir de sa valeur U₀₁ qui correspondait à un courant de batterie nul, jusqu'à ce qu'elle atteigne une valeur U₀₂ correspondant à une puissance maximale de charge P_{Bcharge} (ou une puissance moindre) de la batterie à l'instant t₂. Au-delà, la puissance additionnelle de freinage sera absorbée par l'organe de sécurité 7 commandé par le signal S_{c} pour atteindre une puissance déterminée P_{S}. L'équilibre des puissances électriques continue d'être assuré par la batterie 6 fonctionnant au voisinage de sa puissance maximale de charge.

Les mêmes phénomènes se répètent dans l'ordre inverse à partir de l'instant t₄ où la puissance ou le couple de freinage (puissance PT négative) demandé par le signal F commence à diminuer. Cette puissance est absorbée uniquement par la batterie entre t₅ et t₆, instant où la demande de freinage cesse. La tension de consigne U_{0c} revient alors à sa valeur initiale U₀₁.

Il faut noter qu'en mode de traction ou en mode de freinage, l'équilibrage des flux de puissance comme décrit ci-dessus ne sera pas affecté par l'enclenchement de l'organe consommateur 8 représenté à la figure 1. Simplement l'unité de commande 20 tiendra compte de cet enclenchement dans le calcul de la répartition des puissances, en augmentant la puissance à fournir par le groupe générateur 1 ou la batterie 6 en mode de traction, ou en réduisant la puissance à absorber par la batterie 6 ou l'organe de sécurité 7 en mode de freinage. Dans ce but, l'un des signaux X représenté à la figure 1 pourra indiquer à l'unité 20 la puissance nominale enclenchée de l'organe consommateur 8, sans qu'il soit nécessaire de mesurer la puissance précise absorbée par cet organe.

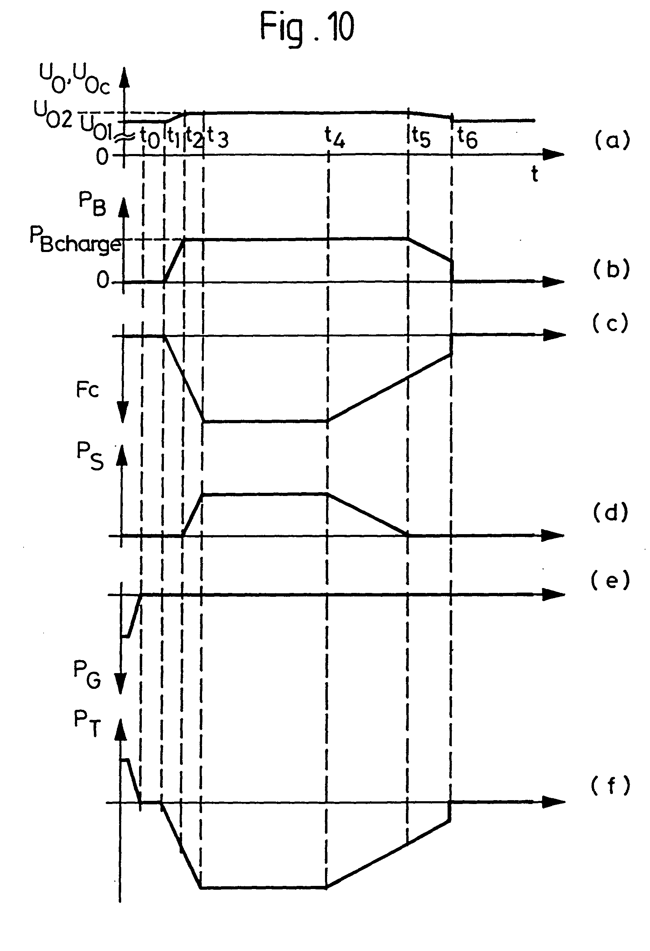

La figure 10 est une représentation analogue à celle de la figure 9, mais illustre une autre forme de réalisation du procédé selon l'invention en mode de freinage électrique au moyen de la batterie 6 et de l'organe de sécurité 7. Dans ce cas, l'équilibrage des puissances électriques par réglage de la tension U₀ ne s'effectue pas sur l'ensemble propulseur 3, mais sur l'organe de sécurité 7. Comme on le voit dans la figure 1, il est alors prévu un deuxième dispositif électronique de réglage 38 qui commande la puissance de l'organe de sécurité 7 en mode de freinage comme le fait l'unité de réglage 24 sur l'ensemble propulseur 3 en mode de traction.

En mode de freinage, l'unité 24 ne reçoit plus la consigne de tension U_{0c} mais une consigne de couple de freinage F_{c}. Elle "oublie" alors son réglage de tension et elle commande la puissance négative PT de l'ensemble propulseur directement en fonction de F_{c}. L'unité de commande 20 délivre alors la consigne de tension U_{0c} à l'unité de réglage 38, qui reçoit aussi la valeur U0 et commande en conséquence une augmentation ou diminution de la puissance de l'organe de sécurité 7 par un signal S_{F}.

La figure 10 montre l'évolution temporelle des paramètres du système dans les mêmes circonstances que pour la figure 9. Les diagrammes (a), (b), (d), (e) et (f) sont identiques à ceux de la figure 9. Le diagramme (c) représente l'évolution de la consigne de couple de freinage F_{c}, produisant une évolution comparable à la puissance de freinage P_{T}. Jusqu'à l'instant t₂, les paramètres représentés varient comme dans la figure 9. A partir de ce moment, comme la consigne U_{0c} ne peut plus augmenter afin de ne pas surcharger la batterie 6, l'augmentation de la puissance de freinage électrique P_{T} tend à faire monter la tension U₀ du circuit d'alimentation, si bien que le circuit de réglage 38 réagit et augmente la puissance P_{S} de l'organe de sécurité 7 afin de stabiliser automatiquement la tension à la valeur U_{0c}. A l'instant t₆, la consigne de freinage F ayant disparu, le système revient au réglage en mode de traction, U_{0c} reprenant sa valeur initiale.

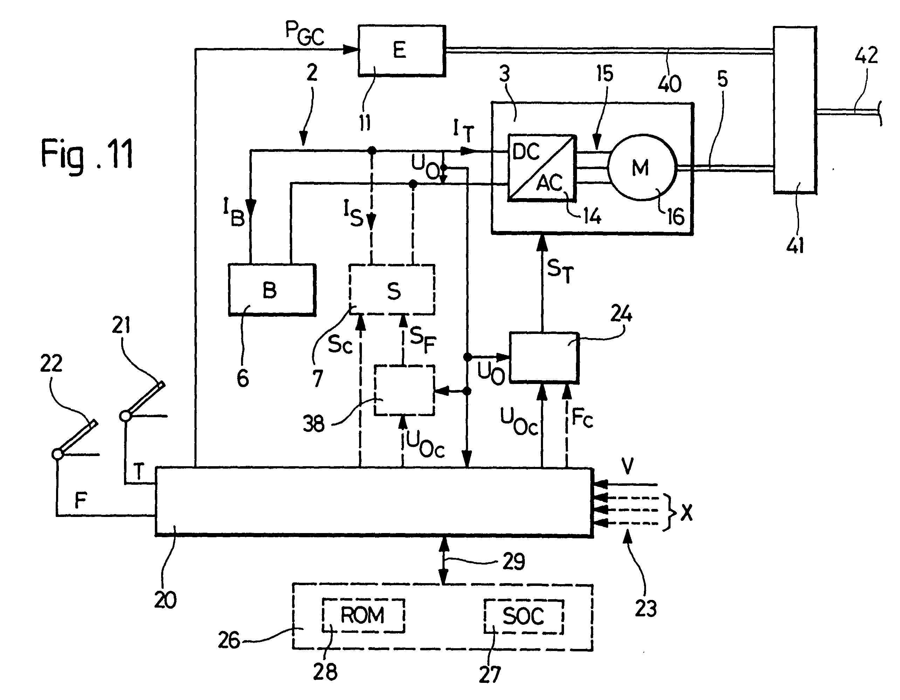

L'homme du métier comprendra que le procédé selon l'invention est applicable de la même manière à des véhicules à propulsion hybride parallèle ou mixte, puisque le calcul de la répartition des flux de puissance ne considère pas la puissance électrique réellement produite par le groupe générateur 1, mais impose une puissance prédéterminée à ce groupe. La figure 11 illustre un exemple d'un système d'entraînement d'un véhicule hybride parallèle selon l'invention, où l'effet du groupe générateur 1 est remplacé par celui d'un moteur thermique 11 entraînant mécaniquement les roues motrices au moyen de son arbre de sortie 40, d'une boîte de vitesses 41 et d'un arbre de transmission 42, en parallèle à l'ensemble propulseur électrique 3. La puissance du moteur 11 est commandée par le signal de consigne P_{Gc} provenant de l'unité de commande 20. Le réglage de la puissance de cet ensemble par réglage de la tension d'alimentation U₀ peut s'effectuer exactement comme on l'a décrit plus haut. Il en va de même dans un système de propulsion mixte, par exemple, si l'on ajoutait au système de la figure 1 une liaison d'entraînement mécanique entre l'arbre du moteur 11 et l'arbre 5 entraînant la roue motrice 4.

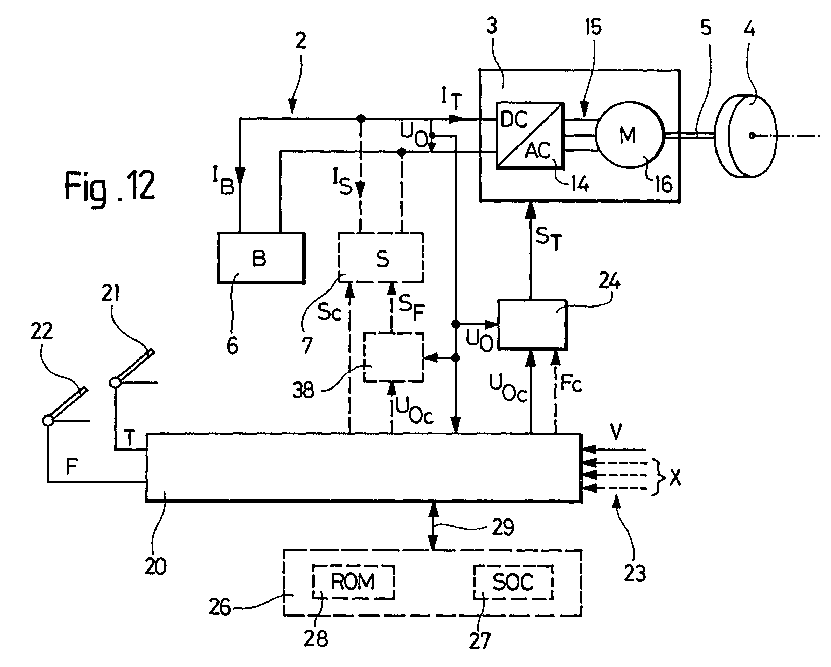

Bien entendu, le procédé selon l'invention est aussi utilisable dans un véhicule dont le système d'entraînement est entièrement électrique et alimenté par la batterie 6 en mode de traction, comme le montre la figure 12. Par rapport au système représenté à la figure 1, cela revient à supprimer le groupe générateur 1 et le signal correspondant P_{Gc}. On pourrait aussi remplacer ce groupe par une autre source d'énergie électrique réglable telle qu'une pile à combustible, dont la puissance serait commandée par le signal P_{Gc}.

## Revendications

1. Procédé pour régler la répartition de la puissance électrique dans un circuit d'alimentation à tension continue dans un véhicule automobile comportant plusieurs organes électriques (1, 3, 6, 7, 8) susceptibles de consommer et/ou produire de la puissance sur le circuit d'alimentation, l'un desdits organes électriques étant un ensemble propulseur électrique (3) susceptible d'entraîner au moins une roue motrice (4) du véhicule, le procédé étant **caractérisé en ce que**, dans un mode de traction, on définit l'ensemble propulseur (3) comme organe d'équilibrage de puissance, lequel échange une puissance réglée avec le circuit d'alimentation (2), on détermine une tension de consigne (U0c) du circuit d'alimentation, on surveille continuellement une tension effective (U0) du circuit d'alimentation et l'on règle la puissance de l'organe d'équilibrage de façon à maintenir ladite tension effective au niveau de ladite tension de consigne.

2. Procédé selon la revendication 1, dans lequel l'un desdits organes électriques est un groupe générateur (1) susceptible d'échanger sur commande une première puissance avec le circuit d'alimentation (2), **caractérisé en ce qu'**on commande ladite première puissance sur la base d'une demande de puissance ou de couple (T, F) donnée par un conducteur du véhicule.

3. Procédé selon la revendication 1 ou 2, dans lequel lesdits organes électriques comprennent une batterie électrique (6), **caractérisé en ce qu'**on surveille un état de charge de la batterie (6) et l'on détermine la tension de consigne (U0c) en fonction dudit état de charge.

4. Procédé selon la revendication 3, **caractérisé en ce que** pour déterminer la tension de consigne en fonction de l'état de charge, on utilise une relation caractéristique prédéterminée entre le courant (IB) et la tension (UB) aux bornes de la batterie pour chaque état de charge.

5. Procédé selon la revendication 4, **caractérisé en ce que** pour déterminer une valeur nulle de la puissance échangée entre la batterie (6) et le circuit d'alimentation (2), on détermine la tension de consigne (U0c) comme égale à la tension à vide (UB0) de la batterie pour son état de charge actuel.

6. Procédé selon la revendication 4, **caractérisé en ce que** pour porter la batterie (6) à un état de charge voulu qui est inférieur ou supérieur à l'état de charge actuel, on détermine la tension de consigne (U0c) comme égale à la tension à vide (UB07) de la batterie à l'état de charge voulu.

7. Procédé selon l'une des revendications 1 à 3, dans lequel lesdits organes électriques comprennent un organe de sécurité (7) destiné à consommer de la puissance excédentaire lorsque l'ensemble propulseur (3) est utilisé pour un freinage électrique, **caractérisé en ce que**, dans un mode de freinage électrique, on fait fonctionner l'organe de sécurité (7) à une puissance déterminée et l'on utilise l'ensemble propulseur (3) comme organe d'équilibrage fournissant une puissance au circuit d'alimentation.

8. Système d'entraînement pour véhicule automobile, notamment pour la mise en oeuvre du procédé selon la revendication 1, ledit système comportant plusieurs organes électriques (1, 3, 6, 7, 8) susceptibles de consommer et/ou produire de la puissance sur le circuit d'alimentation, l'un desdits organes étant un ensemble propulseur électrique réglable (3) susceptible d'entraîner au moins une roue motrice (4) du véhicule, et des moyens de commande agencés pour commander la puissance de l'ensemble propulseur (3), lequel échange une deuxième puissance avec le circuit d'alimentation (2), les moyens de commande étant agencés pour surveiller continuellement la tension effective (U0) du circuit d'alimentation, **caractérisé en ce que** les moyens de commande (20 - 38) comportent une unité électronique de réglage (24) associée à l'ensemble propulseur (3) et agencée pour régler la puissance de celui-ci dans un mode de traction sur la base d'une tension de consigne (U0c) définie par les moyens de commande, de façon à maintenir ladite tension effective au niveau de ladite tension de consigne.

9. Système d'entraînement selon la revendication 8, **caractérisé en ce que** l'un desdits organes électriques est un groupe générateur (1) susceptible de fournir sur commande une première puissance à un circuit d'alimentation (2) à tension continue, et **en ce que** les moyens de commande (20 - 38) sont agencés pour commander ladite première puissance sur la base d'une demande de puissance donnée par un conducteur du véhicule.

10. Système d'entraînement selon la revendication 8 ou 9, **caractérisé en ce que** lesdits organes électriques comprennent une batterie électrique (6) raccordée au circuit d'alimentation (2).

11. Système d'entraînement selon l'une des revendications 8 à 10, **caractérisé en ce que** lesdits organes électriques comprennent un organe de sécurité (7) destiné à consommer de la puissance excédentaire lorsque l'ensemble propulseur (3) est utilisé dans un mode de freinage électrique.

## Patentansprüche

1. Verfahren zum Regeln der Verteilung der elektrischen Leistung in einem Gleichspannungs-Versorgungskreis in einem Kraftfahrzeug, das eine Vielzahl elektrischer Einrichtungen (1, 3, 6, 7, 8) aufweist, die in der Lage sind, dem Versorgungskreis Leistung zuzuführen und/oder Leistung aus dem Versorgungskreis zu entnehmen, wobei eine der elektrischen Einrichtungen eine elektrische Antriebseinheit (3) ist, die in der Lage ist, mindestens ein Antriebsrad (4) des Fahrzeugs anzutreiben, **dadurch gekennzeichnet, daß** in einem Antriebsmodus die Antriebseinheit (3) als Leistungausgleichseinrichtung, die eine mit dem Versorgungskreis (2) geregelte Leistung austauscht, bestimmt, eine Referenzspannung (U0c) des Versorgungskreises festgelegt, eine Effektivspannung (U0) des Versorgungskreises kontinuierlich überwacht und die Leistung der Ausgleichseinrichtung derart geregelt wird, daß die Effektivspannung auf dem Pegel der Referenzspannung bleibt.

2. Verfahren nach Anspruch 1, bei dem eine der elektrischen Einrichtungen ein Generatorblock (1) ist, der in der Lage ist, auf Anweisung eine erste Leistung mit dem Versorgungskreis (2) auszutauschen, **dadurch gekennzeichnet, daß** die erste Leistung auf Basis einer Leistung- oder einer Drehmomentanforderung (T, F), die durch einen Fahrzeugführer erzeugt wird, gesteuert wird.

3. Verfahren nach Anspruch 1 oder 2, bei dem die elektrischen Einrichtungen eine elektrische Batterie (6) aufweisen, **dadurch gekennzeichnet, daß** ein Ladungszustand der Batterie (6) überwacht und die Referenzspannung (U0c) abhängig vom Ladungszustand festgelegt wird.

4. Verfahren nach Anspruch 3, **dadurch gekennzeichnet, daß** zum Festlegen der Referenzspannung in Abhängigkeit des Ladungszustandes ein vorbestimmtes, charakteristisches Verhältnis zwischen dem Strom (IB) und der Spannung (UB) an den Klemmen der Batterie für jeden Ladungszustand verwendet wird.

5. Verfahren nach Anspruch 4, **dadurch gekennzeichnet, daß** zum Festlegen eines Wertes Null der zwischen der Batterie (6) und dem Versorgungskreis (2) ausgetauschten Leistung die Referenzspannung (U0c) gleich der offenen Spannung (UB0) der Batterie für ihren aktuellen Ladungszustand festgelegt wird.

6. Verfahren nach Anspruch 4, **dadurch gekennzeichnet, daß** zum Bringen der Batterie (6) auf einen gewünschten Ladungszustand, der kleiner oder größer als der aktuelle Ladungszustand ist, die Referenzspannung (U0c) gleich der offenen Spannung (UB07) der Batterie im gewünschten Ladungszustand festgelegt wird.

7. Verfahren nach einem der Ansprüche 1 bis 3, bei dem die elektrischen Einrichtungen eine Sicherheitseinrichtung (7) umfassen, die dazu bestimmt ist, überschüssige Leistung zu verbrauchen, wenn die Antriebseinheit (3) für ein elektrisches Bremsen verwendet wird, **dadurch gekennzeichnet, daß** in einem elektrischen Bremsmodus die Sicherheitseinrichtung (7) mit einer vorbestimmten Leistung betrieben und die Antriebseinheit (3) als Ausgleichseinrichtung bestimmt wird, die Leistung an den Versorgungskreis liefert.

8. Antriebssystem für ein Kraftfahrzeug, insbesondere zum Ausführen des Verfahrens nach Anspruch 1, wobei das System eine Vielzahl elektrischer Einrichtungen (1, 3, 6, 7, 8), die in der Lage sind, dem Versorgungskreis Leistung zuzuführen und/oder Leistung aus dem Versorgungskreis zu entnehmen, wobei eine der elektrischen Einrichtungen eine regelbare elektrische Antriebseinheit (3) ist, die in der Lage ist, mindestens ein Antriebsrad (4) des Fahrzeugs anzutreiben, und Steuermittel umfaßt, die zum Steuern der Leistung der Antriebseinheit (3) ausgestaltet sind, die eine zweite Leistung mit dem Versorgungskreis (2) austauscht, wobei die Steuermittel zum kontinuierlichen Überwachen der Effektivspannung (U0) des Versorgungskreises ausgestaltet sind, **dadurch gekennzeichnet, daß** die Steuermittel (20-38) einen elektronischen Regler (24) aufweisen, der der Antriebseinheit (3) zugeordnet und zum Regeln ihrer Leistung in einem Antriebsmodus auf Basis einer Referenzspannung (U0c) ausgestaltet ist, die derart durch die Steuermittel bestimmt wird, daß die Effektivspannung auf dem Pegel der Referenzspannung bleibt.

9. Antriebssystem nach Anspruch 8, **dadurch gekennzeichnet, daß** eine der elektrischen Einrichtungen ein Generatorblock (1) ist, der in der Lage ist, auf Anforderung eine erste Leistung an einen Versorgungskreis (2) mit Gleichspannung zu liefern, und daß die Steuermittel (20-38) zum Steuern der ersten Leistung auf Basis einer Leistungsanforderung, die von einem Fahrzeugführer erzeugt wird, ausgestaltet sind.

10. Antriebssystem nach Anspruch 8 oder 9, **dadurch gekennzeichnet, daß** die elektrischen Einrichtungen eine elektrische Batterie (6) umfassen, die mit dem Versorgungskreis (2) verbunden ist.

11. Antriebssystem nach einem der Ansprüche 8 bis 10, **dadurch gekennzeichnet, daß** die elektrischen Einrichtungen eine Sicherheitseinrichtung (7) aufweisen, die dazu bestimmt ist, überschüssige Leistung zu verbrauchen, wenn die Antriebseinheit (3) in einem elektrischen Bremsmodus betrieben wird.

## Claims

1. Method for adjusting the electric power distribution in a direct voltage supply circuit in a motor vehicle including several electric elements (1, 3, 6, 7, 8) capable of consuming and/or producing power in the supply circuit, one of said electric elements being an electric driving set (3) capable of driving at least one driving wheel (4) of the vehicle, the method being **characterised in that**, in a driving mode, the driving set (3) is defined as a power balancing element, which exchanges an adjusted power with the supply circuit (2), a desired voltage (U_{0c}) of the supply circuit is determined, an effective supply circuit voltage (U₀) is continually monitored and said balancing element adjusted power is adjusted so as to maintain said effective voltage at the level of said desired voltage.

2. Method according to claim 1, wherein one of said electric elements is a generator set (1) capable of exchanging upon demand a first power with the supply circuit (2), **characterised in that** said first power is controlled on the basis of a power or torque command (T, F) given by a driver of the vehicle.

3. Method according to claim 1 or 2, wherein said electric elements include an electric battery (6), **characterised in that** a state of charge of the battery (6) is monitored and the desired voltage (U_{0c}) is determined as a function of said state of charge.

4. Method according to claim 3, **characterised in that** in order to determine the desired voltage as a function of the state of charge, a predetermined characteristic relationship between the current (I_{B}) and the voltage (U_{B}) at the battery terminals is used for each state of charge.

5. Method according to claim 4, **characterised in that** in order to determine a zero value of the power exchanged between the battery (6) and the supply circuit (2), the desired voltage (U_{0c}) is determined as equal to a no-load voltage (U_{B0}) of the battery for its present state of charge.

6. Method according to claim 4, **characterised in that** in order to bring the battery (6) to a desired state of charge which is less or greater than its present state of charge, the desired voltage (U_{0c}) is determined as equal to a no-load voltage (U_{B07}) of the battery at the desired state of charge.

7. Method according to any of claims 1 to 3, wherein said electric elements include a safety element (7) intended to consume surplus power when the driving set (3) is used for electric braking, **characterised in that**, in case of electric braking, the safety element (7) is made to operate at a determined power and the driving set (3) is used as a balancing element supplying power to the supply circuit.

8. Motor vehicle driving system, in particular for the implementation of the method according to claim 1, said system including several electric elements (1, 3, 6, 7, 8) capable of consuming and/or producing power in the supply circuit, one of said elements being an adjustable electric driving set (3) capable of driving at least one driving wheel (4) of the vehicle, and control means arranged for controlling the power of said driving set (3), which exchanges a second power with the supply circuit (2), said control means being arranged so as to continuously monitor the effective supply circuit voltage (U₀), **characterised in that** said control means (20 - 38) include an electronic adjustment unit (24) associated with the driving set (3) and arranged for adjusting the power of the latter in a driving mode on the basis of a desired voltage (U_{0c}) defined by the control means, so as to maintain said effective voltage at the level of said desired voltage.

9. Driving system according to claim 8, **characterised in that** one of said electric elements is a generator set (1) capable of providing upon demand a first power to a direct voltage supply circuit (2), and **in that** the control means (20 - 38) are arranged for controlling said first power on the basis of a power command given by a driver of the vehicle.

10. Driving system according to claim 8 or 9, **characterised in that** said electric elements include an electric battery (6) connected to the supply circuit (2).

11. Driving system according to any of claims 8 to 10, **characterised in that** said electric elements include a safety element (7) intended to consume surplus power when the driving set (3) is used for electric braking.
